# FASCICULE DE BREVET EUROPEEN

(11) **EP 1 063 207 B1**
(45) Date de publication et mention de la délivrance du brevet: **24.08.2005**
(21) Numéro de dépôt: 00401780.2
(22) Date de dépôt: 22.06.2000
(51) Int. Cl.: C04B 28/14, C04B 28/16, C04B 18/04, A62D 3/00

(54) **Liant pour la stabilisation des déchets arséniés**
Bindemittel zur Stabilisierung von Arsenenthaltenden Abfällen
Binder for stabilising arsenic containing wastes

(30) Priorité: 25.06.1999 FR 9908140
(43) Date de publication de la demande: 27.12.2000
(73) Titulaire: Inertec, 92000 Nanterre (FR)
(72) Inventeur: Cojan, Jean-Yves, 92200 Neuilly-sur-Seine (FR)
(74) Mandataire: Nevant, Marc

(56) Documents cités:
- EP-A- 0 603 457
- US-A- 4 118 243
- PATENT ABSTRACTS OF JAPAN vol. 1998, no. 10, 31 août 1998 (1998-08-31) & JP 10 137716 A (KANEGAFUCHI CHEM IND CO LTD), 26 mai 1998 (1998-05-26)
- PATENT ABSTRACTS OF JAPAN vol. 1999, no. 09, 30 juillet 1999 (1999-07-30) & JP 11 116319 A (YOSHINO GYPSUM CO LTD), 27 avril 1999 (1999-04-27)

## Description

La présente invention concerne le domaine du traitement des déchets industriels. Plus particulièrement, l'invention concerne un procédé pour la stabilisation de déchets arséniés.

De nombreuses industries, et en particulier l'industrie métallurgique et l'industrie d'extraction des métaux précieux génèrent des sous-produits solides à fortes teneurs en arsenic. Ces sous-produits sont fortement toxiques et il convient de les rendre inoffensifs pour l'environnement. A cette fin il est nécessaire en premier lieu de transformer l'arsenic présent dans le résidu en une forme très peu soluble. Ensuite, il conviendra de solidifier l'ensemble de façon à l'emprisonner dans une matrice aussi peu perméable que possible.

Dans le cas du traitement d'un résidu arsénié solide en vue de son stockage en centre d'enfouissement technique de 1^{ère} catégorie (CET 1) ou sur tout autre centre de stockage agréé, il convient non seulement de transformer l'arsenic en une forme la moins soluble possible, mais aussi de solidifier l'ensemble en utilisant par exemple des liants hydrauliques.

La demande de brevet EP-A-603 457 décrit un matériau pour traiter les déchets, notamment les déchets industriels contenant des métaux lourds dangereux, qui comprend du ciment, au moins un métal réducteur et éventuellement au moins un composé choisi parmi un agent réducteur, du sulfate d'aluminium, de l'allophane et la bentonite. L'abrégé de Patent Abstracts of Japan, vol. 1998, n° 10 (JP-A-10 137 716) décrit un agent pour stabiliser des déchets toxiques, notamment des déchets arséniés, qui comprend un mélange de ciment contenant essentiellement du gypse et d'un absorbant inorganique poreux pulvérulent tel que du dioxyde de silicium ou du silicate d'aluminium poreux. Le brevet US 4 118 243 décrit un procédé pour transformer un déchet contenant des sels d'arsenic solubles en un matériau contenant lesdits sels sous forme insoluble, qui consiste à faire réagir, dans un système aqueux, un déchet arsénié avec une source d'acide sulfurique et une source d'hydroxyde de calcium pour effectuer ladite transformation, puis à laisser durcir le système afin d'obtenir un produit solide.

La difficulté majeure est que l'emploi de liants hydrauliques classiques, en particulier les ciments, provoque une redissolution partielle de la scorodite (FeAsO₄) qui est l'une des formes la moins soluble de l'arsenic. Les quantités d'arsenic qui peuvent être ainsi solubilisées lors d'un contact du déchet solidifié avec l'eau environnante sont alors largement supérieures au seuil couramment admis.

La présente invention se propose de remédier à cet inconvénient. Ainsi, l'invention a pour objet un procédé de stabilisation de déchets arséniés mettant en oeuvre un liant hydraulique qui permet d'éviter la redissolution partielle de la scorodite.

Conformément à l'invention, ce liant hydraulique non basique, est constitué par du plâtre, de l'anhydrite, ou un mélange de ces composés, l'anhydrite étant préférée.

Avantageusement, le procédé selon l'invention comprend dans un premier temps le mélange, par exemple dans un malaxeur (de type malaxeur à béton et mortier), d'un déchet arsénié avec au moins un sel de fer choisi avantageusement parmi le sulfate de fer ferreux ou ferrique, le chlorure de fer ferreux ou ferrique ou encore le nitrate de fer. Selon un mode de réalisation particulièrement avantageux, on utilise un mélange de deux sels de fer, comprenant de préférence du sulfate ferreux.

La quantité de sels de fer à ajouter dépend essentiellement en premier lieu de la quantité d'arsenic solubilisable contenue dans le déchet, en second lieu de l'acidité à apporter au déchet pour que le pH de l'ensemble ainsi traité soit proche de la neutralité.

Selon l'invention la quantité de sels de fer ajoutée est telle que le rapport molaire Fe : As solubilisable soit compris entre environ 1,0 et 50 et préférentiellement entre environ 1,5 et 25. Le pH final du mélange déchet + sels de fer est alors compris entre environ 4,5 et 7,5 et préférentiellement entre environ 5 et 7.

Dans le cas où le pH du mélange déchet + sels de fer ne serait pas compris dans la fourchette indiquée ci-dessus, on peut l'ajuster soit par ajout d'un oxyde ou hydroxyde d'un métal alcalin ou alcalino-terreux, soit par ajout d'un acide (par l'exemple l'acide chlorhydrique, sulfurique, nitrique ou fluorhydrique).

Une fois cette première phase réalisée, on ajoute au mélange le liant hydraulique non basique défini précédemment, de manière à obtenir après prise un produit massif, solide et peu perméable.

Selon l'invention, la quantité de liant hydraulique à ajouter est comprise entre environ 150 et 1500 kg, de préférence entre environ 200 et 800 kg, par tonne de déchet initial. Si l'on utilise un mélange de plâtre et d'anhydrite, le rapport pondéral plâtre/anhydrite est avantageusement compris entre environ 0,05 et 0,5.

L'addition du liant hydraulique permet de solidifier le déchet arsénié et de conserver au déchet solidifié un pH proche de la neutralité. De la sorte, la solubilité de l'arsenic est maintenue à un niveau très faible.

Le pH du déchet solidifié est déterminé selon la norme X31211 qui consiste à placer le déchet dans dix fois son poids en eau, à maintenir une agitation douce pendant 16 h puis à mesurer le pH à la fin de cette période.

Enfin, on peut également ajouter au mélange de l'eau et/ou une ou plusieurs poudres fines telles que fumée de silice, poudre de silice, zéolithe, cendres volantes de centrale thermique, qui permettent d'adapter la rhéologie du mélange final au mode de mise en oeuvre du produit fini. Avantageusement, on utilise jusqu'à environ 1500 l, de préférence entre environ 50 et 300 l d'eau, et/ou environ 50 à 400 kg de poudres fines par tonne de déchet initial.

Selon l'invention, la rhéologie du produit fini peut être adaptée soit à une mise en oeuvre par coulage comme cela se fait pour des bétons, soit à une mise en oeuvre par compactage comme cela se fait pour la mise en place des graves routières.

Les exemples ci-dessous illustrent l'invention de manière non-limitative.

### Exemple 1

| Analyse d'un déchet arsenié provenant de l'industrie métallurgique | |
|---|---|
| Analyse sur éluat obtenu selon la Norme X31210 | Analyse sur solide en mg/kg de matière sèche |
| Teneur en eau = 22,4% | As = 178 000 |
| pH = 9,32 | Al =17600 |
| As = 1488 mg/kg de matière sèche | Ca = 50 700 |
| | Fe =123 000 |
| | Na = 21 100 |
| | Si = 205 000 |

On ajoute successivement dans un malaxeur à béton, 1000 kg de déchet arsénié, dont l'analyse est donnée ci-dessus, 45 kg d'une solution de FeCl₃ à 41% et 55 kg de FeSO₄, 1,5 H₂O (rapport molaire Fe : As = 21). Après agitation pendant 5 minutes, on ajoute ensuite 250 kg de plâtre et on poursuit le malaxage pendant 2 minutes supplémentaires. On obtient en sortie de malaxeur une poudre compactable selon les techniques de graves routières. 210 grammes de cette poudre sont ensuite placés dans un moule cylindrique de 40 mm de diamètre et 120 mm de hauteur puis on applique par l'intermédiaire d'un piston, une charge de 13 kN de manière à compacter la poudre et confectionner de cette manière une éprouvette solide. Après 8 jours de maturation afin de permettre au liant hydraulique de faire sa prise, cette éprouvette est soumise à un test de résistance mécanique en compression simple ainsi qu'à un test de lixiviation selon la norme X31211. L'éluat ainsi obtenu est ensuite analysé par torche à plasma (ICP, de l'anglais Induced Coupled Plasma) en vue de déterminer la quantité d'arsenic encore soluble. Les résultats de ces test sont les suivants :
Rc en MPa = 1,2 MPa
Densité de l'éprouvette = 2,05
pH = 6,55
As lixiviable < à la limite de détection de l'appareil (0,01 mg/l)

### Exemple 2

Dans un deuxième mode de mise en oeuvre, on introduit dans un malaxeur à béton 1000 kg du déchet de l'exemple 1, auquel on ajoute successivement 29 kg d'une solution de FeCl₃ à 41%, 70 kg de FeSO₄, 1,5 H₂O (rapport molaire Fe : As = 20,4), 120 litres d'eau et enfin 350 kg d'anhydrite. A la fin de la période de malaxage (5 min.) on obtient un mortier directement moulable dans des éprouvettes plastique de 40 mm de diamètre et 110 mm de hauteur. Les éprouvettes ainsi obtenues ont ensuite été testées au bout 28 jours puis de 47 jours de maturation.

Les résultats obtenus sont les suivants :

| | |
|---|---|
| Densité de l'éprouvette = 1,99 | |
| A 28 jours | A 47 jours |
| Rc = 2,30 MPa | Rc = 2,47 MPa |
| pH = 6,2 | pH = 6,47 |
| As lixiviable< limite de détection (0,01 mg/l) | As lixiviable < limite de détection (0,01 mg/l) |

### Exemple 3

| Analyse d'un déchet arsenié provenant de l'industrie métallurgique | |
|---|---|
| Analyse sur éluat obtenu selon la Norme X31210 | Analyse sur solide en mg/kg de matière sèche |
| Teneur en eau = 34,25% | As = 144 000 |
| pH = 10,38 | Al = 11 200 |
| As = 22 859 mg/kg de matière sèche | Ca = 37 100 |
| | Fe =187 000 |
| | Na = 49 100 |
| | Si = 180 000 |

Pour traiter le déchet dont l'analyse est donnée ci-dessus, en vue d'une mise en oeuvre par compactage, on a ajouté dans le même malaxeur qu'à l'exemple précédent, 1000 kg de déchet, 28 kg d'une solution de FeCl₃ à 41%, 96 kg de FeSO₄, 1,5 H₂O (rapport molaire Fe : As = 2,3), puis 150 kg de fumée de silice et enfin 500 kg d'anhydrite. La poudre obtenue en sortie de malaxeur à ensuite été utilisée pour fabriquer des éprouvettes selon la même procédure que dans l'exemple 1. Les résultats obtenus après 28 jours de maturation sont les suivants :
Densité des éprouvettes = 2,03
Rc = 9,36 MPa
pH=7,11
As lixiviable < limite de détection (0,01 mg/l)

### Exemple 4

| Analyse d'un déchet arsenié provenant de l'industrie métallurgique | |
|---|---|
| Analyse sur éluat obtenu selon la Norme X31210 | Analyse sur solide en mg/kg de matière sèche |
| Teneur en eau = 18,4% | As = 153 300 |
| pH = 13,38 | Al = 11 200 |
| As = 125 735 mg/kg de matière sèche | Ca = 37 100 |
| Fraction soluble = 96,1% | Fe = 187 000 |
| | Na = 415 700 |
| | Sb = 252 700 |

Dans l'optique d'une mise en oeuvre par coulage, on ajoute successivement dans un malaxeur 1000 kg de déchet dont l'analyse est donnée ci-dessus, 140 kg de Fe(NO₃)₃,9 H₂O, 525 kg de FeSO₄, 1,5 H₂O (rapport molaire Fe : As = 2), et 1250 litres d'eau. Après 5 minutes de malaxage, on ajoute lentement 500 kg de H₂SO₄ à 98%. Une fois l'ajout d'acide terminé on complète le traitement par l'ajout de 1500 kg d'anhydrite.

Après une période de maturation de 8 jours, on obtient les résultats suivants :
Densité des éprouvettes = 1,74
Rc = 5,63 MPa
pH = 6,1
As lixiviable = 9,3 mg/kg de déchet solidifié

## Revendications

1. Procédé pour la stabilisation de déchets arséniés, dans lequel la stabilisation est effectuée au moyen d'un liant constitué par du plâtre, de l'anhydrite, ou un mélange de ces composés.

2. Procédé selon la revendication 1, qui comprend
a) le mélange d'un déchet arsénié avec au moins un sel de fer, et
b) l'addition audit mélange dudit liant.

3. Procédé selon la revendication 2, dans lequel on utilise à l'étape a) un mélange de deux sels de fer choisis parmi le sulfate de fer, le chlorure de fer ou le nitrate de fer.

4. Procédé selon la revendication 3, dans lequel ledit mélange comprend du sulfate ferreux.

5. Procédé selon l'une des revendications 2 à 4, dans lequel le pH du mélange obtenu à l'issue de l'étape a) est éventuellement ajusté entre environ 4,5 et 7,5, de préférence entre environ 5 et 7.

6. Procédé selon l'une des revendications 2 à 5, dans lequel le rapport molaire Fe : As solubilisable du mélange obtenu à l'issue de l'étape a) est compris entre environ 1 et 50, de préférence entre environ 1,5 et 25.

7. Procédé selon l'une des revendications 2 à 6, dans lequel la quantité de liant utilisé à l'étape b) est comprise entre environ 150 et 1500 kg, de préférence entre environ 200 et 800 kg, par tonne de déchet initial.

8. Procédé selon l'une des revendications 2 à 7, qui comprend en outre l'addition au mélange obtenu à l'issue de l'étape a) d'eau et/ou d'une ou plusieurs poudres fines.

9. Procédé selon la revendication 8, dans lequel on utilise jusqu'à environ 1500 l d'eau et/ou environ 50 à 400 kg de poudres fines par tonne de déchet initial.

10. Procédé selon l'une des revendications 1 à 9, dans lequel le liant est l'anhydrite.

11. Utilisation d'un liant hydraulique non-basique choisi parmi le plâtre, l'anhydrite, ou un mélange de ces composés, pour la stabilisation de déchets arséniés.

## Patentansprüche

1. Verfahren zur Stabilisierung von arsenhaltigen Abfällen, wobei die Stabilisierung mit Hilfe eines Bindemittels erfolgt, das aus Gips, Anhydrit oder einem Gemisch dieser Verbindungen besteht.

2. Verfahren nach Anspruch 1, umfassend
a) Mischen eines arsenhaltigen Abfalls mit mindestens einem Eisensalz und
b) Zugabe des Bindemittels zu dem Gemisch.

3. Verfahren nach Anspruch 2, wobei in Schritt a) ein Gemisch von zwei Eisensalzen, ausgewählt aus Eisensulfat, Eisenchlorid oder Eisennitrat, verwendet wird.

4. Verfahren nach Anspruch 3, wobei das Gemisch Eisen(II)sulfat umfasst.

5. Verfahren nach einem der Ansprüche 2 bis 4, wobei der pH des am Ende von Schritt a) erhaltenen Gemischs gegebenenfalls zwischen etwa 4,5 und 7,5, vorzugsweise zwischen etwa 5 und 7, eingestellt wird.

6. Verfahren nach einem der Ansprüche 2 bis 5, wobei das Molverhältnis von Fe : solubilisierbarem As des am Ende von Schritt a) erhaltenen Gemischs zwischen etwa 1 und 50, vorzugsweise zwischen etwa 1,5 und 25, liegt.

7. Verfahren nach einem der Ansprüche 2 bis 6, wobei die Menge des in Schritt b) verwendeten Bindemittels zwischen etwa 150 und 1500 kg, vorzugsweise zwischen etwa 200 und 800 kg, pro Tonne des ursprünglichen Abfalls liegt.

8. Verfahren nach einem der Ansprüche 2 bis 7, ferner umfassend die Zugabe von Wasser und/oder einem oder mehreren feinen Pulvern zu dem am Ende von Schritt a) erhaltenen Gemisch.

9. Verfahren nach Anspruch 8, wobei bis zu etwa 1500 1 Wasser und/oder etwa 50 bis 400 kg feine Pulver pro Tonne des ursprünglichen Abfalls verwendet werden.

10. Verfahren nach einem der Ansprüche 1 bis 9, wobei das Bindemittel Anhydrit ist.

11. Verwendung eines hydraulischen nicht basischen Bindemittels, ausgewählt aus Gips, Anhydrit oder einem Gemisch dieser Verbindungen, zur Stabilisierung von arsenhaltigen Abfällen.

## Claims

1. A method of stabilising arsenic-containing waste, in which method the stabilisation is carried out by means of a binder which is made up of plaster, anhydrite, or a mixture of these compounds.

2. The method according to claim 1, which comprises :
a) mixing an arsenic-containing waste with at least one iron salt, and
b) adding said binder to said mixture.

3. The method according to claim 2, in which a mixture of two iron salts selected from iron sulphate, iron chloride or iron nitrate, is used in step a).

4. The method according to claim 3, in which said mixture comprises ferrous sulphate.

5. The method according to one of claims 2 to 4, in which the pH of the mixture obtained at the end of step a) is optionally adjusted between about 4.5 and 7.5, preferably between about 5 and 7.

6. The method according to one of claims 2 to 5, in which the Fe : dissolvable As molar ratio of the mixture obtained at the end of step a) is between about 1 and 50, preferably between about 1.5 and 25.

7. The method according to one of claims 2 to 6, in which the amount of binder used in step b) is between about 150 and 1,500 kg, preferably between about 200 and 800 kg, per tonne of initial waste.

8. The method according to one of claims 2 to 7, which further comprises adding water and/or one or more fine powders to the mixture obtained at the end of step a).

9. The method according to claim 8, in which up to about 1,500 l of water and/or about 50 to 400 kg of fine powders is used per per tonne of initial waste.

10. The method according to one of claims 1 to 9, in which the binder is anhydrite.

11. Use of a non-basic hydraulic binder selected from plaster, anhydrite, or a mixture of these compounds, for stabilising arsenic-containing waste.
